# FASCICULE DE BREVET EUROPEEN

(11) **EP 2 425 714 B1**
(45) Date de publication et mention de la délivrance du brevet: **29.10.2014**
(21) Numéro de dépôt: 11180331.8
(22) Date de dépôt: 07.09.2011
(51) Int. Cl.: A01M 7/00

(54) **Dispositif et procédé pour distribuer un produit liquide à projeter sur une surface**
Vorrichtung und Verfahren zum Verteilen eines flüssigen Produkts zum Spritzen auf eine Fläche
Device and method for distributing a liquid product to be sprayed onto a surface

(30) Priorité: 07.09.2010 FR 1057094
(43) Date de publication de la demande: 07.03.2012
(73) Titulaire: EXEL INDUSTRIES, 51200 Epernay (FR)
(72) Inventeur: Ballu, Patrick Jean Marie, 51100 Reims (FR)
(74) Mandataire: Chevalier, Renaud Philippe

(56) Documents cités:
- EP-A1- 0 916 259
- EP-A2- 1 958 506
- FR-A1- 2 828 531

## Description

La présente invention concerne un dispositif et un procédé pour pulvériser un produit liquide sur une surface telle qu'un terrain agricole.

La présente invention trouve application dans le domaine agricole pour pulvériser sur un champ un produit phytosanitaire liquide tel qu'un engrais ou un biocide du type herbicide, insecticide fongicide etc.

Un dispositif de pulvérisation de l'art antérieur comprend une rampe de pulvérisation, une cuve formant réservoir d'alimentation pour contenir le produit liquide, une conduite d'alimentation raccordée à la rampe et une pompe d'alimentation reliée, d'une part, au réservoir d'alimentation et, d'autre part, à la conduite d'alimentation.

Un autre dispositif est divulgué par EP 0 916 259 A1.

Après une phase de pulvérisation par la rampe du produit liquide sur un terrain agricole, l'opérateur arrête l'engin tracteur et procède à la vidange puis au rinçage du dispositif, afin de bien le nettoyer avant de remplir à nouveau le réservoir d'alimentation, avec un produit éventuellement différent voire incompatible, en vue d'une nouvelle phase de pulvérisation.

Cependant, en raison du désamorçage de la pompe d'alimentation, la vidange du dispositif induit la perte d'un volume important de produit liquide résiduel, c'est-à-dire restant dans les tuyauteries, de l'ordre de 80 L à 120 L pour une rampe mesurant 44 m de long, ce qui équivaut généralement au volume pulvérisé sur 1 ha de terrain agricole. En outre, un procédé de rinçage d'un dispositif de l'art antérieur est relativement long à effectuer et il consomme un volume d'eau important pour diluer (plusieurs fois) puis évacuer tout le volume de produit liquide résiduel.

Un objet de la présente invention est de résoudre, en tout ou partie, les problèmes mentionnés ci-avant.

A cet effet, l'invention a pour objet un dispositif, pour pulvériser un produit liquide sur une surface telle qu'un terrain agricole, le dispositif comprenant:
- une rampe comportant plusieurs tronçons équipés chacun de plusieurs buses pour projeter le produit liquide ;
- un réservoir d'alimentation conçu pour contenir le produit liquide ;
- au moins une conduite d'alimentation destinée à être raccordée à la rampe;
- une pompe d'alimentation, de préférence de type centrifuge, comprenant un orifice d'aspiration relié au réservoir d'alimentation et un orifice de refoulement relié à la conduite d'alimentation.

Le dispositif comprend en outre un réservoir de fluide et une pompe d'évacuation, la pompe d'évacuation comprenant un orifice d'aspiration relié au réservoir de fluide et un orifice de refoulement relié à l'orifice d'aspiration de la pompe d'alimentation.

En d'autres termes, dans un dispositif conforme à l'invention, une pompe d'évacuation permet, au cours de la fin de la phase de pulvérisation, de « pousser » vers la rampe le produit liquide qui reste dans le circuit aval où se trouvent la pompe d'alimentation et la conduite d'alimentation, afin d'utiliser la totalité du produit liquide. La phase de vidage d'un dispositif conforme à l'invention représente la fin de la phase de pulvérisation.

Ainsi, le produit liquide résiduel est aussi pulvérisé sur le terrain agricole, ce qui évite ou limite fortement les pertes de produit liquide.

Selon un mode de réalisation, la rampe comporte des canalisations agencées de sorte que deux tronçons successifs sont reliés par une canalisation respective, et les éléments de la rampe situés les plus en aval sont constitués par les buses.

Ainsi, les pertes de produit liquide sont davantage réduites, car un tel dispositif ne comporte pas de canalisation de recirculation ou de retour reliant la rampe au réservoir d'alimentation. Inversement, lorsque le dispositif comporte une canalisation de recirculation ou de retour, cette canalisation de retour peut être fermée pendant la phase de vidage.

Selon un mode de réalisation, le dispositif comprend au moins un détecteur de désamorçage agencé pour générer un signal dès que la pompe d'alimentation se désamorce de façon à déclencher l'actionnement de la pompe d'évacuation.

Ainsi, la pompe d'évacuation est actionnée très rapidement, ce qui prolonge la phase de pulvérisation en achevant le vidage d'un dispositif conforme à l'invention.

Selon un mode de réalisation, le détecteur de désamorçage comprend un capteur de pression qui est disposé en aval de la pompe d'alimentation, de préférence en aval de la conduite d'alimentation, de préférence encore sur la rampe.

Ainsi, un tel capteur de pression détecte très rapidement le désamorçage de la pompe d'alimentation.

Selon un mode de réalisation, le dispositif comprend en outre un capteur de débit agencé sur la conduite d'alimentation.

Ainsi, connaissant le volume matériel du circuit à vidr, un tel capteur de débit permet de déterminer l'instant où tout le produit liquide résiduel a été expulsé de ce circuit, donc d'interrompre le vidage d'un dispositif conforme à l'invention.

Selon un mode de réalisation, le dispositif comprend en outre une pompe auxiliaire comprenant :
- un orifice d'aspiration qui est relié au fond du réservoir d'alimentation et qui est disposée sous le fond du réservoir d'alimentation ; et
un orifice de refoulement relié à la pompe d'alimentation.

Ainsi, une telle pompe auxiliaire permet de vider complètement le réservoir d'alimentation.

Selon un mode de réalisation, la pompe auxiliaire comprend une pompe à effet Venturi.

Ainsi, une telle pompe à effet Venturi permet de réaliser une pompe auxiliaire peu coûteuse et fiable, car dépourvue de pièces en mouvement.

Selon un mode de réalisation, le dispositif comprend en outre au moins une vanne dite de recirculation, qui est agencée sur une canalisation de recirculation, de façon à interrompre un écoulement de recirculation lorsqu'un capteur de jauge indique que le volume de produit liquide contenu dans le réservoir d'alimentation devient inférieur à un niveau bas prédéterminé.

Ainsi, au cours de la phase de pulvérisation, le produit liquide ne recircule pas vers le réservoir d'alimentation, ce qui permet une grande régularité du débit de pulvérisation.

Selon un mode de réalisation, le fluide contenu dans le réservoir de fluide est de l'eau, le réservoir de fluide pouvant être une cuve de rinçage, la pompe d'évacuation étant de préférence une pompe à membrane.

Ainsi, la pompe d'alimentation d'un tel dispositif est « gavée » en eau, ce qui permet de commencer la phase de rinçage en vidant le dispositif, donc de réduire le temps et le volume d'eau nécessaire à son rinçage, en poussant jusqu'aux buses tout le produit liquide résiduel, sans aucune perte et immédiatement, ce qui évite la sédimentation de ce produit liquide résiduel dans le dispositif conforme à l'invention.

Selon un mode de réalisation, le fluide contenu dans le réservoir de fluide est de l'air comprimé, le réservoir de fluide est un accumulateur d'air comprimé et la pompe d'évacuation est un compresseur

Ainsi, dans un tel dispositif, la quasi-totalité du produit liquide résiduel est expulsée jusqu'à la rampe et aux buses au moyen d'air comprimé, ce qui évite de commencer le rinçage à l'eau, limitant ainsi la consommation d'eau donc les coûts induits.

Selon un mode de réalisation, le dispositif comprend en outre une première vanne de vidange agencée pour commander une vidange complète de la pompe d'alimentation, et, de préférence, une deuxième vanne de vidange agencée pour commander une vidange complète d'un filtre disposé en amont de la pompe d'alimentation.

Ainsi, le vidage du circuit est réalisée de manière absolument complète. Tout le produit liquide résiduel est pulvérisé sur le terrain agricole, ce qui évite les pertes de produit liquide.

Par ailleurs, l'invention a pour objet un procédé pour pulvériser un produit liquide sur une surface telle qu'un terrain agricole, le procédé comprenant les étapes suivantes :
- mettre en oeuvre un dispositif tel que précédemment exposé ;
- détecter l'instant où la pompe d'alimentation se désamorce lors d'un écoulement d'alimentation en produit liquide entre le réservoir d'alimentation et l'orifice d'aspiration de la pompe d'alimentation ;
- interrompre l'écoulement d'alimentation ;
- actionner la pompe d'évacuation pour réaliser un écoulement de fluide, de préférence à un débit et à une pression prédéterminés, entre l'orifice de refoulement de la pompe d'évacuation et l'orifice d'aspiration de la pompe d'alimentation; et
- interrompre l'écoulement de fluide après une durée prédéterminée de façon à évacuer par la rampe un volume de produit liquide correspondant au volume matériel, dit volume mort, qui s'étend entre l'aval de l'orifice de refoulement de la pompe d'alimentation et l'aval de la rampe.

Selon un mode de réalisation, le procédé comprend en outre les étapes suivantes :
- mettre en oeuvre un dispositif tel que précédemment exposé avec une pompe auxiliaire;
- actionner la pompe d'alimentation pour réaliser un écoulement du produit liquide entre le réservoir d'alimentation et l'orifice d'aspiration de la pompe d'alimentation;
- actionner la pompe auxiliaire pour réaliser un écoulement auxiliaire de produit liquide entre le réservoir d'alimentation et l'orifice d'aspiration de la pompe d'alimentation

Ainsi, le vidage est effectué de façon complète.

Selon un mode de réalisation, le procédé comprend en outre les étapes suivantes :
- mettre en oeuvre un dispositif tel que précédemment exposé en générant, en aval de la pompe auxiliaire, une pression supérieure à la pression générée par la pompe d'évacuation ;
- intégrer les mesures effectuées par le capteur de débit de façon à quantifier un volume auxiliaire déplacé par la pompe auxiliaire et s'écoulant dans la conduite d'alimentation ;
- interrompre l'écoulement auxiliaire lorsque le volume auxiliaire correspond au volume résiduel dans le réservoir d'alimentation.

Ainsi, le déroulement de la phase de vidage est réalisé et contrôlé de façon précise.

La présente invention sera bien comprise et ses avantages ressortiront aussi à la lumière de la description qui va suivre, qui est donnée uniquement à titre d'exemple non limitatif et qui est faite en référence aux dessins annexés, dans lesquels :
- la figure 1 est une représentation schématique, donc sans échelle, d'un dispositif conforme à un premier mode de réalisation de l'invention; et
- la figure 2 est une représentation similaire à la figure 1 d'un dispositif conforme à un deuxième mode de réalisation de l'invention.

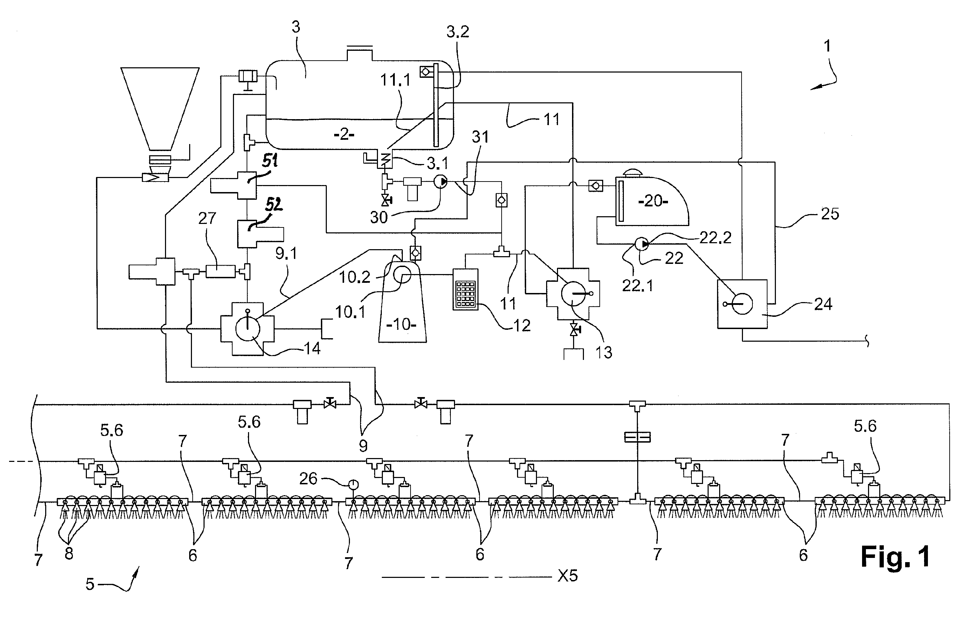

La figure 1 illustre un dispositif 1 pour pulvériser un produit liquide 2, qui est contenu dans un réservoir d'alimentation 3, sur une surface telle qu'un terrain agricole. Le dispositif 1 comprend une rampe 5 pour pulvériser le produit liquide 2.

La rampe 5 est portée par un chassis et des roues non représentés, de façon à rouler sur le terrain agricole. Les roues passent avantageusement dans des traces dépourvues de semis ou de plants. La rampe 5 a une longueur d'environ 44 m. La longueur de la rampe est sélectionnée en fonction de l'application de la rampe.

Sur la figure 1, la rampe 5 est représentée partiellement. Dans l'exemple de la figure 1, la rampe 5 comporte huit tronçons, dont six seulement sont visibles à la figure 1 avec la référence 6. Chaque tronçon est équipé de onze buses 8 pour pulvériser le produit liquide 2. Les tronçons 6 sont consécutifs dans la direction longitudinale X5 de la rampe 5. Dans l'exemple de la figure 1, les tronçons 6 sont colinéaires à la direction longitudinale X5; cependant, les tronçons 6 peuvent être non colinéaires dans le cas où la rampe 5 est articulée ou repliée.

Dans la présente demande, l'expression « produit liquide » désigne tout produit comprenant une phase liquide. Le produit liquide 2 peut être de toute nature, par exemple un produit phytosanitaire tel qu'un engrais ou un biocide du type herbicide, insecticide, fongicide etc.

Le dispositif 1 comprend deux conduites d'alimentation 9 raccordées à la rampe 5. Chaque conduite d'alimentation 9 alimente la rampe 5, en canalisant du produit liquide 2 vers des tronçons 6.

Le dispositif 1 comprend en outre une pompe d'alimentation 10 qui est disposée en amont de chaque conduite d'alimentation 9. Dans l'exemple de la figure 1, la pompe d'alimentation 10 est de type centrifuge. La pompe d'alimentation 10 comprend un orifice d'aspiration 10.1, qui est relié au réservoir d'alimentation 3, et un orifice de refoulement 10.2, qui est relié aux conduites d'alimentation 9.

Dans la présente demande, les verbes « relier », « raccorder », « connecter », « alimenter » et leurs dérivés se rapportent à la communication de fluide, c'est-à-dire à l'écoulement de liquide ou de gaz, entre deux éléments distants, par l'intermédiaire d'aucun, d'un ou de plusieurs composants. De plus, les termes « amont » et « aval » font référence au sens d'écoulement du produit liquide dans un dispositif conforme à l'invention, depuis le réservoir d'alimentation jusqu'aux buses.

L'orifice d'aspiration 10.1 est relié au réservoir d'alimentation 3 par l'intermédiaire d'une conduite amont 11, sur laquelle sont montés un filtre 12 et une vanne primaire 13 à quatre positions. L'extrémité amont 11.1 de la conduite amont 11 plonge au niveau du fond 3.1 du réservoir d'alimentation 3. Le réservoir d'alimentation 3 est équipé d'un capteur de jauge 3.2 qui génère un signal de jauge en fonction du niveau de produit liquide 2.

L'orifice de refoulement 10.2 est relié aux conduites d'alimentation 9 par l'intermédiaire d'une conduite commune 9.1 et d'une vanne d'alimentation 14 à quatre positions.

Le dispositif 1 comprend en outre un réservoir d'eau 20 et une pompe d'évacuation 22. Le réservoir d'eau 20 est un réservoir de fluide pour contenir l'eau servant d'abord à la fin du vidage puis au rinçage du dispositif 1. La pompe d'évacuation 22 est de type à membrane et elle comprend un orifice d'aspiration 22.1, qui est relié directement au réservoir d'eau 20, et un orifice de refoulement 22.2, qui est relié à l'orifice d'aspiration 10.1 de la pompe d'alimentation 10 par l'intermédiaire d'une vanne d'évacuation 24 et d'une conduite d'évacuation 25. Alternativement, la pompe d'évacuation peut être une pompe à piston.

L'orifice de refoulement 22.2 est relié à l'orifice d'aspiration 10.1 en parallèle de la conduite amont 11. La pompe d'évacuation 22 a pour fonctions de vider le dispositif 1 et d'opérer son rinçage. Dans l'exemple de la figure 1, on sélectionne une pompe d'évacuation 22 débitant 72 L/min sous une pression maximale de 20 bar.

Le fluide contenu dans le réservoir de fluide est de l'eau, le réservoir de fluide pouvant être une cuve de rinçage, la pompe d'évacuation étant de préférence une pompe à membrane.

La rampe 5 comporte des canalisations 7 agencées de sorte que deux tronçons 6 successifs suivant la direction longitudinale X5 sont reliés par une canalisation 7 respective. Inversement, chaque canalisation 7 relie respectivement deux tronçons 6 successifs.

De plus, les éléments de la rampe 5 situés les plus en aval sont constitués par les buses 8, car chaque tronçon 6 débite uniquement dans des buses 8 ou dans des canalisations 7, le dispositif 1 étant ici dépourvu de conduite de recirculation ou de retour.

La rampe 5 comporte en outre des vannes de tronçon 5.6 qui permettent ou empêchent l'écoulement du produit liquide 2 dans un tronçon 6 respectif.

Le dispositif 1 comprend en outre un capteur de pression 26 qui est disposé sur la rampe 5. Le capteur de pression 26 forme un détecteur de désamorçage qui est agencé pour générer un signal dès que la pompe d'alimentation 10 se désamorce, ce qui permet de déclencher l'actionnement de la pompe d'évacuation 22.

Le dispositif 1 comprend en outre un capteur de débit 27 qui est agencé sur la conduite commune 9.1, juste en amont de chaque conduite d'alimentation 9. Le capteur de débit 27 mesure de façon continue le débit de produit liquide 2, ce qui permet de piloter la phase de vidage avec précision, comme cela est décrit ci-après.

Par ailleurs, le dispositif 1 comprend une pompe auxiliaire 30 qui est disposée sous le fond 3.1 du réservoir d'alimentation 3. La pompe auxiliaire 30 a un orifice de refoulement relié à la pompe d'alimentation 10, juste en amont du filtre 12, par l'intermédiaire d'une conduite auxiliaire 31. La pompe auxiliaire 30 a pour fonction de terminer le vidage du réservoir d'alimentation 3, comme cela est décrit ci-après.

Chaque composant du dispositif 1 est piloté par une unité centrale non représentée qui comprend un calculateur. L'ensemble des composants et canalisations s'étendant entre le réservoir d'alimentation 3 et les buses 8 définit un volume physique ou matériel, dit volume mort.

De plus, le dispositif 1 comprend une vanne dite de fond de cuve 51 et une vanne de régulation 52, qui sont agencées sur une canalisation de recirculation de façon à interrompre un écoulement de recirculation, lorsque le capteur de jauge 3.2 indique que le volume de produit liquide 2 contenu dans le réservoir d'alimentation 3 devient inférieur à un niveau bas prédéterminé, par exemple 300 L.

En fonctionnement, un dispositif conforme à l'invention est mis en oeuvre suivant un procédé conforme à l'invention. Dans un tel procédé, pour pulvériser un produit liquide sur une surface telle qu'un terrain agricole, on réalise une phase de pulvérisation, une phase de vidage et une phase de rinçage.

Au cours de la phase de pulvérisation, le produit liquide 2 est prélevé dans le réservoir d'alimentation 3 par la pompe d'alimentation 10, si bien qu'il circule dans la conduite amont 11, la vanne amont 13, le filtre 12, la pompe d'alimentation 10, la conduite commune 9.1, la vanne d'alimentation 14, chaque conduite d'alimentation 9, puis dans la rampe 5 jusqu'aux buses 8.

La fin de la phase de pulvérisation, correspondant à la phase de vidage débute lorsque le capteur de jauge 3.2 indique que le réservoir d'alimentation 3 atteint un niveau de produit liquide 2 prédéterminé, par exemple 300 L. Au cours de la phase de vidage, un procédé conforme à l'invention comprend les étapes suivantes :
- Détecter l'instant où la pompe d'alimentation 10 se désamorce lors d'un écoulement d'alimentation en produit liquide 2 entre le réservoir d'alimentation 3 et l'orifice d'aspiration 10.2 de la pompe d'alimentation 10. Cette détection est opérée par le capteur de pression 26, car le désamorçage provient de l'introduction d'air par vortex dans le dispositif 1 en fin de phase de pulvérisation.
- Interrompre l'écoulement d'alimentation en actionnant la vanne amont 13, laquelle peut être remplacée par un clapet anti-retour.
- Actionner la pompe d'évacuation 22 pour réaliser un écoulement d'eau, de préférence à un débit et une pression prédéterminés, entre l'orifice de refoulement 22.2 de la pompe d'évacuation 22 et l'orifice d'aspiration 10.1 de la pompe d'alimentation 10. Dans l'exemple de la figure 1, l'eau s'écoule dans la conduite d'évacuation 25 à un débit de 72 L/min.
- Interrompre l'écoulement d'eau après une durée prédéterminée de façon à évacuer par la rampe 5 un volume de produit liquide 2 correspondant au volume mort qui s'étend entre l'aval de l'orifice de refoulement 10.2 de la pompe d'alimentation 10 et l'aval de la rampe 5. Dans l'exemple de la figure 1, le volume matériel ou volume mort est d'environ 80 L. En l'occurrence, cette durée prédéterminée est d'environ 1 min, car la pompe d'évacuation débite 72 L/min.

Ainsi, l'eau déplacée par la pompe d'évacuation 22 « pousse » le produit liquide 2 hors du dispositif 1 via les buses 8.

En outre, un procédé conforme à l'invention peut comprendre les étapes suivantes :
- Le cas échéant, au début de la phase de vidage, fermer toutes les canalisations de retour du produit liquide vers le réservoir d'alimentation 3. En particulier, les canalisations de retour destinées à brasser et à homogénéiser le produit liquide contenu dans le réservoir d'alimentation 3 peuvent avantageusement être détournées vers l'amont de la pompe d'alimentation 10.
- Actionner la pompe d'alimentation 10 pour réaliser un écoulement du produit liquide 2 entre le réservoir d'alimentation 3 et l'orifice d'aspiration 10.1 de la pompe d'alimentation 10.
- Actionner, simultanément à la pompe d'alimentation 10, la pompe auxiliaire 30 pour réaliser un écoulement auxiliaire de produit liquide 2 entre le réservoir d'alimentation 3 et l'orifice d'aspiration 10.1 de la pompe d'alimentation 10. Cette étape est réalisée lorsque le capteur de jauge 3.2 indique que le niveau de produit liquide 2 atteint le fond 3.1, donc que la pompe d'alimentation 10 est sur le point de se désamorcer.

En outre, la pompe auxiliaire 30 génère une pression supérieure à la pression générée par la pompe d'évacuation 22, ce qui évite que cette dernière ne refoule dans la conduite auxiliaire 31 au niveau de la pompe d'alimentation 10.

Puis, un procédé conforme à l'invention peut comprendre les étapes suivantes :
- Intégrer les mesures effectuées par le capteur de débit 27 de façon à quantifier un volume auxiliaire déplacé par la pompe auxiliaire 30 et s'écoulant dans la conduite d'alimentation 10. L'intégration des mesures de débit sur la durée d'actionnement de la pompe auxiliaire 30 détermine le volume auxiliaire.
- Interrompre l'écoulement auxiliaire dans la conduite auxiliaire 31 lorsque le volume auxiliaire correspond au volume résiduel dans le réservoir d'alimentation 3. Typiquement, ce volume résiduel peut être de l'ordre de 10 L à 20 L.

A la fin d'un procédé de vidage conforme à l'invention, le dispositif 1 se trouve empli d'eau, ce qui réduit la durée et la consommation d'eau au cours de la phase de rinçage.

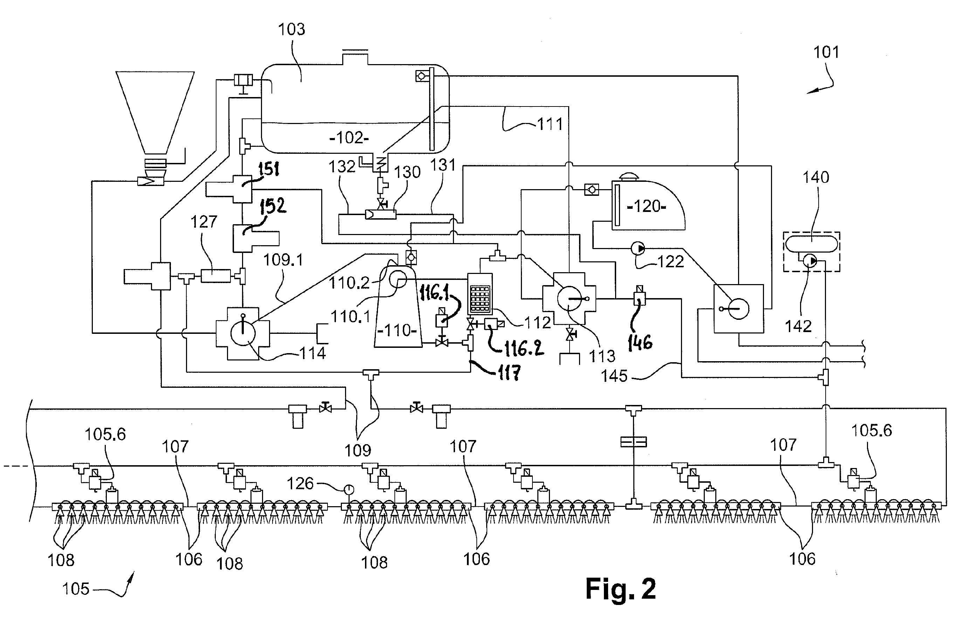

La figure 2 illustre un dispositif 101 conforme à un deuxième mode de réalisation de l'invention. Dans la mesure où le dispositif 101 est semblable au dispositif 1, la description du dispositif 1, donnée ci-avant en relation avec la figure 1, peut être transposée au dispositif 101, à l'exception des différences énoncées ci-après. Un élement du dispositif 101 semblable ou correspondant, par sa structure ou par sa fonction, à un élément du dispositif 1 porte ci-après la même référence numérique augmentée de 100.

On définit ainsi un produit liquide 102, un réservoir d'alimentation 103, une rampe 105 avec des tronçons 106, des vannes de tronçon 105.6, des canalisations 107 et des buses 108, deux conduites d'alimentation 109, une conduite amont 111, un filtre 112, une vanne amont 113, une vanne d'alimentation 114, un capteur de pression 126, un capteur de débit 127, une pompe auxiliaire 130, une conduite auxiliaire 131, une vanne de fond de cuve 151 et une vanne de régulation 152.

Le dispositif 101 diffère du dispositif 1, car il comporte, au lieu du réservoir d'eau 20, un accumulateur 140 qui forme un réservoir d'air comprimé. De plus, la pompe d'évacuation 142 est formée par un compresseur générant de l'air comprimé stocké dans l'accumulateur 140.

La pompe d'évacuation 142 et l'accumulateur 140 débitent de l'air comprimé, par exemple sous 6 bar, dans une conduite d'évacuation 145. La conduite d'évacuation 145 est reliée à la pompe d'alimentation 110 et aux conduites d'alimentation 109. Suivant un procédé conforme à l'invention tel que décrit ci-avant, l'air comprimé est injecté dans la conduite d'évacuation 145 de façon à « pousser » le produit liquide 102 hors du dispositif 101 via les buses 108.

Par ailleurs, le dispositif 101 diffère du dispositif 1, car la pompe auxiliaire comprend une pompe à effet Venturi 130, dans laquelle on injecte de l'air comprimé provenant de l'accumulateur 140 et de la pompe d'évacuation 142 de façon à générer une dépression au col du Venturi, entre l'entrée et la sortie de la pompe à effet Venturi.

Au cours de la phase de vidage, le capteur de débit 127 détermine le volume résiduel de produit liquide 102 ainsi expulsé et l'écoulement d'air comprimé est interrompu lorsque ce volume correspond au volume mort du dispositif 101 ou lorsque le capteur de pression 126 détecte l'absence de produit liquide 102.

De plus, le dispositif 101 diffère du dispositif 1, car il comprend en outre :
- une première vanne de vidange 116.1, qui est agencée pour commander une vidange complète de la pompe d'alimentation 110, et
- une deuxième vanne de vidange 116.2, qui est agencée pour commander une vidange complète du filtre 112.

La première vanne de vidange 116.1 et la deuxième vanne de vidange 116.2 sont ici actionnées par une puissance électrique.

Au cours de la phase de vidage, l'écoulement d'air comprimé dans la pompe d'alimentation 110 et dans le filtre 112 chasse le liquide résiduel vers le fond de la pompe d'alimentation 110 et le fond du filtre 112. Ce liquide résiduel s'écoule à travers une conduite de vidange 117, laquelle est reliée à la conduite d'alimentation 109. La première vanne de vidange 116.1 et la deuxième vanne de vidange 116.2 permettent ainsi respectivement une vidange complète de la pompe d'alimentation 110 et une vidange complète du filtre 112.

De plus, le dispositif 101 comprend un régulateur 146 pour réguler le débit d'air comprimé s'écoulant dans la conduite d'évacuation 145.

Par ailleurs, le dispositif 101 comprend un réservoir d'eau 120 et une pompe de rinçage 122, qui ensuite sont utilisés classiquement pour effectuer la phase de rinçage du dispositif 101, mais seulement après la fin de la phase de vidage du produit liquide résiduel par de l'air comprimé, telle que décrite ci-avant.

Selon d'autres modes de réalisation de l'invention non représentés, pris isolément ou selon toute combinaison techniquement admissible :
- Le capteur de pression remplissant la fonction de détecteur de désamorçage est disposé en amont de la rampe et en aval de la pompe d'alimentation, par exemple juste à la sortie de la pompe d'alimentation ou sur la conduite d'alimentation ou encore entre le réservoir d'alimentation et la pompe d'alimentation.
- La pompe d'alimentation peut être à membrane ou à piston, au lieu d'être centrifuge.
- Lorsque le dispositif comporte une canalisation de recirculation ou de retour, un procédé conforme à l'invention comprend une étape initiale de fermeture de cette canalisation de retour, comme par exemple au moyen de vannes de type 151 ou 152.

## Revendications

1. Dispositif (1 ; 101), pour pulvériser un produit liquide (2 ; 102) sur une surface telle qu'un terrain agricole, le dispositif (1 ; 101) comprenant :
- une rampe (5 ; 105) comportant plusieurs tronçons (6 ; 106) équipés chacun de plusieurs buses (8 ; 108) pour projeter le produit liquide (2 ; 102) ;
- un réservoir d'alimentation (3 ; 103) conçu pour contenir le produit liquide (2 ; 102) ;
- au moins une conduite d'alimentation (9 ; 109) destinée à être raccordée à la rampe (5 ; 105) ;
- une pompe d'alimentation (10 ; 110), de préférence de type centrifuge, comprenant un orifice d'aspiration (10.1 ; 110.1) relié au réservoir d'alimentation (3 ; 103) et un orifice de refoulement (10.2 ; 110.2) relié à la conduite d'alimentation (9 ; 109) ;
le dispositif (1 ; 101) comprenant en outre un réservoir de fluide (20; 140) et une pompe d'évacuation (22; 142), la pompe d'évacuation (22; 142) comprenant un orifice d'aspiration (22.1) relié au réservoir de fluide (20; 140)
le dispositif étant **caractérisé en ce que** la pompe d'évacuation comprend un orifice de refoulement (22.2) relié à l'orifice d'aspiration (10.1 ; 110.1) de la pompe d'alimentation (10 ; 110).

2. Dispositif (1 ; 101) selon la revendication 1, **caractérisé en ce que** la rampe (5 ; 105) comporte des canalisations (7 ; 107) agencées de sorte que deux tronçons (6 ; 106) successifs sont reliés par une canalisation (7 ; 107) respective, et **en ce que** les éléments de la rampe (5 ; 105) situés les plus en aval sont constitués par les buses (8 ; 108).

3. Dispositif (1 ; 101) selon l'une des revendications précédentes, **caractérisé en ce qu'**il comprend au moins un détecteur de désamorçage (26 ; 126) agencé pour générer un signal dès que la pompe d'alimentation (10 ; 110) se désamorce de façon à déclencher l'actionnement de la pompe d'évacuation (22; 142).

4. Dispositif (1 ; 101) selon l'une des revendications précédentes, **caractérisé en ce que** le détecteur de désamorçage (26 ; 126) comprend un capteur de pression qui est disposé en aval de la pompe d'alimentation (10 ; 110), de préférence en aval de la conduite d'alimentation (9 ; 109), de préférence encore sur la rampe (5 ; 105).

5. Dispositif (1 ; 101) selon l'une des revendications précédentes, **caractérisé en ce qu'**il comprend en outre un capteur de débit (27 ; 127) agencé sur la conduite d'alimentation (9 ; 109).

6. Dispositif (1 ; 101) selon l'une des revendications précédentes, **caractérisé en ce qu'**il comprend en outre une pompe auxiliaire (30 ; 130) comprenant :
- un orifice d'aspiration qui est relié au fond du réservoir d'alimentation (3 ; 103) et qui est disposée sous le fond du réservoir d'alimentation (3 ; 103) ; et
- un orifice de refoulement relié à la pompe d'alimentation (10 ; 110).

7. Dispositif (1 ; 101) selon la revendication 6, **caractérisé en ce que** la pompe auxiliaire (30 ; 130) comprend une pompe à effet Venturi.

8. Dispositif (1) selon l'une des revendications précédentes, **caractérisé en ce qu'**il comprend en outre au moins une vanne dite de recirculation (51, 52 ; 151, 152), qui est agencée sur une canalisation de recirculation, de façon à interrompre un écoulement de recirculation lorsqu'un capteur de jauge (3.2) indique que le volume de produit liquide (2 ; 102) contenu dans le réservoir d'alimentation (3 ; 103) devient inférieur à un niveau bas prédéterminé.

9. Dispositif (1) selon l'une des revendications précédentes, **caractérisé en ce que** le fluide contenu dans le réservoir de fluide (20) est de l'eau, le réservoir de fluide (20) pouvant être une cuve de rinçage, la pompe d'évacuation (22) étant de préférence une pompe à membrane.

10. Dispositif (101) selon l'une des revendications 1 à 8, **caractérisé en ce que** le fluide contenu dans le réservoir de fluide (140) est de l'air comprimé, **en ce que** le réservoir de fluide (140) est un accumulateur d'air comprimé et **en ce que** la pompe d'évacuation (142) est un compresseur.

11. Dispositif (101) selon l'une des revendications 9 à 1 0, **caractérisé en ce qu'**il comprend en outre une première vanne de vidange (116.1) agencée pour commander une vidange complète de la pompe d'alimentation (110), et, de préférence, une deuxième vanne de vidange (116.2) agencée pour commander une vidange complète d'un filtre (112) disposé en amont de la pompe d'alimentation (110).

12. Procédé, pour pulvériser un produit liquide (2 ; 102) sur une surface telle qu'un terrain agricole, le procédé comprenant les étapes suivantes :
- mettre en oeuvre un dispositif (1 ; 101) selon l'une des revendications précédentes ;
- détecter l'instant où la pompe d'alimentation (10 ; 110) se désamorce lors d'un écoulement d'alimentation en produit liquide (2 ; 102) entre le réservoir d'alimentation (3 ; 103) et l'orifice d'aspiration (10.1 ; 110.1) de la pompe d'alimentation (10 ; 110) ;
- interrompre l'écoulement d'alimentation ;
- actionner la pompe d'évacuation (22; 142) pour réaliser un écoulement de fluide, de préférence à un débit et à une pression prédéterminés, entre l'orifice de refoulement (22.2) de la pompe d'évacuation (22; 142) et l'orifice d'aspiration (10.2 ; 110.2) de la pompe d'alimentation (10 ; 110) ; et
- interrompre l'écoulement de fluide après une durée prédéterminée de façon à évacuer par la rampe (5 ; 105) un volume de produit liquide (2 ; 102) correspondant au volume matériel, dit volume mort, qui s'étend entre l'aval de l'orifice de refoulement (10.2 ; 110.2) de la pompe d'alimentation (10 ; 110) et l'aval de la rampe (5 ; 105).

13. Procédé selon la revendication 12, **caractérisé en ce qu'**il comprend en outre les étapes suivantes :
- mettre en oeuvre un dispositif (1 ; 101) selon l'une des revendications 6 et 7 ; et
- actionner la pompe d'alimentation (10 ; 110) pour réaliser un écoulement du produit liquide (2 ; 102) entre le réservoir d'alimentation (3 ; 103) et l'orifice d'aspiration (10.1 ; 110.1) de la pompe d'alimentation (10 ; 110) ;
- actionner la pompe auxiliaire (30 ; 130) pour réaliser un écoulement auxiliaire de produit liquide (2 ; 102) entre le réservoir d'alimentation (3 ; 103) et l'orifice d'aspiration (10.1 ; 110.1) de la pompe d'alimentation (10 ; 110).

14. Procédé selon la revendication 13, **caractérisé en ce qu'**il comprend en outre les étapes suivantes :
- mettre en oeuvre le dispositif (1 ; 101) selon la revendication 9 en générant, en aval de la pompe auxiliaire (30 ; 130), une pression supérieure à la pression générée par la pompe d'évacuation (22; 142) ;
- intégrer les mesures effectuées par le capteur de débit (27 ; 127) de façon à quantifier un volume auxiliaire déplacé par la pompe auxiliaire (30 ; 130) et s'écoulant dans la conduite d'alimentation (9 ; 109) ;
- interrompre l'écoulement auxiliaire lorsque le volume auxiliaire correspond au volume résiduel dans le réservoir d'alimentation (3 ; 103).

## Patentansprüche

1. Vorrichtung (1; 101) zum Versprühen eines flüssigen Produkts (2; 102) auf eine Oberfläche, wie jene eines landwirtschaftlichen Bodens, wobei die Vorrichtung (1; 101) folgendes umfasst:
- eine Rampe (5; 105) umfassend mehrere Abschnitte (6; 106), die jeweils mit mehreren Düsen (8; 108) ausgestattet sind, um das flüssige Produkt (2; 102) zu versprühen;
- einen Versorgungsbehälter (3; 103), der gestaltet ist, um das flüssige Produkt (2; 102) zu beinhalten;
- zumindest eine Versorgungsleitung (9; 109), die dazu bestimmt ist, an die Rampe (5; 105) angeschlossen zu werden;
- eine Förderpumpe (10; 110), vorzugsweise eine Zentrifugalpumpe, umfassend eine Saugöffnung (10.1; 110.1), die mit dem Versorgungsbehälter (3; 103) verbunden ist, und eine Auslassöffnung (10.2; 110.2), die mit der Versorgungsleitung (9; 109) verbunden ist;
wobei die Vorrichtung (1; 101) darüber hinaus einen Fluidbehälter (20; 140) und eine Entleerungspumpe (22; 142) umfasst, und die Entleerungspumpe (22; 142) eine Saugöffnung (22.1) umfasst, die mit dem Fluidbehälter (20; 140) verbunden ist,
und die Vorrichtung **dadurch gekennzeichnet ist, dass** die Entleerungspumpe eine Ablassöffnung (22.2) umfasst, die mit der Saugöffnung (10.1; 110.1) der Förderpumpe (10; 110) verbunden ist.

2. Vorrichtung (1; 101) nach Anspruch 1, **dadurch gekennzeichnet, dass** die Rampe (5; 105) Kanalleitungen (7; 107) umfasst, die so angeordnet sind, dass zwei aufeinander folgende Abschnitte (6; 106) durch eine jeweilige Kanalleitung (7; 107) miteinander verbunden sind, und dadurch, dass die Elemente der Rampe (5; 105), die sich ganz hinten befinden, durch die Düsen (8; 108) gebildet werden.

3. Vorrichtung (1; 101) nach einem der vorherigen Ansprüche, **dadurch gekennzeichnet, dass** sie zumindest einen Leerlaufsensor (26; 126) enthält, der angeordnet ist, um ein Signal zu generieren, sobald die Förderpumpe (10; 110) leerläuft, um den Betrieb der Entleerungspumpe (22; 142) zu starten.

4. Vorrichtung (1; 101) nach einem der vorherigen Ansprüche, **dadurch gekennzeichnet, dass** der Leerlaufsensor (26; 126) einen Drucksensor umfasst, der im Nachlauf der Förderpumpe (10; 110), und vorzugsweise im Nachlauf der Versorgungsleitung (9; 109), und noch besser auf der Rampe (5; 105) angeordnet ist.

5. Vorrichtung (1; 101) nach einem der vorherigen Ansprüche, **dadurch gekennzeichnet, dass** sie darüber hinaus einen Durchflusssensor (27; 127) umfasst, der auf der Versorgungsleitung (9; 109) angeordnet ist.

6. Vorrichtung (1; 101) nach einem der vorherigen Ansprüche, **dadurch gekennzeichnet, dass** sie darüber hinaus eine Hilfspumpe (30; 130) umfasst, die folgendes umfasst:
- eine Saugöffnung, die mit dem Boden des Versorgungsbehälters (3; 103) verbunden, und die unter dem Boden des Versorgungsbehälters (3; 103) angeordnet ist; und
- eine Auslassöffnung, die mit der Förderpumpe (10; 110) verbunden ist.

7. Vorrichtung (1; 101) nach Anspruch 6, **dadurch gekennzeichnet, dass** die Hilfspumpe (30; 130) eine Venturipumpe umfasst.

8. Vorrichtung (1) nach einem der vorherigen Ansprüche, **dadurch gekennzeichnet, dass** sie darüber hinaus zumindest ein Rückführventil (51; 52; 151, 152) genanntes Ventil enthält, das auf einem Rückführkanal angeordnet ist, um die Rückführströmung zu unterbrechen, wenn ein Messsensor (3.2) anzeigt, dass das Volumen des flüssigen Produkts (2; 102), das im Versorgungsbehälter (3; 103) enthalten ist, unter einem vorbestimmten niedrigen Niveau zu liegen kommt.

9. Vorrichtung (1) nach einem der vorherigen Ansprüche, **dadurch gekennzeichnet, dass** die Flüssigkeit, die im Fluidbehälter (20) enthalten ist, Wasser ist, und der Fluidbehälter (20) ein Spülbehälter sein kann, und die Entleerungspumpe (22) vorzugsweise eine Membranpumpe ist.

10. Vorrichtung (101) nach einem der Ansprüche 1 bis 8, **dadurch gekennzeichnet, dass** die Flüssigkeit, die im Fluidbehälter (140) enthalten ist, Druckluft ist, und dadurch, dass der Fluidbehälter (140) ein Druckluftspeicher ist, und dadurch, dass die Entleerungspumpe (142) ein Kompressor ist.

11. Vorrichtung (101) nach einem der Ansprüche 9 bis 10, **dadurch gekennzeichnet, dass** sie darüber hinaus ein erstes Ablassventil (116.1) enthält, das angeordnet ist, um eine vollständige Entleerung der Förderpumpe (110) anzusteuern, und vorzugsweise ein zweites Ablassventil (116.2), das angeordnet ist, um die vollständige Entleerung eines Filters (112) anzusteuern, der im Vorlauf der Förderpumpe (110) angeordnet ist.

12. Verfahren zum Versprühen eines flüssigen Produkts (2; 102) auf eine Oberfläche, wie jene eines landwirtschaftlichen Bodens, wobei das Verfahren folgende Schritte umfasst:
- die Anwendung einer Vorrichtung (1; 101) nach einem der vorherigen Ansprüche;
- die Erfassung des Zeitpunkts, an dem die Förderpumpe (10; 110) bei einer Versorgungsströmung eines flüssigen Produkts (2; 102) zwischen dem Versorgungsbehälter (3; 103) und der Saugöffnung (10.1; 110.1) der Förderpumpe (10; 110) leerläuft;
- das Unterbrechen der Versorgungsströmung;
- das Einschalten der Entleerungspumpe (22; 142), um eine Flüssigkeitsströmung, vorzugsweise mit einem vorbestimmten Durchfluss und Druck zwischen der Auslassöffnung (22.2) der Entleerungspumpe (22; 142) und der Saugöffnung (10.2; 110.2) der Förderpumpe (10; 110) zu erreichen; und
- das Unterbrechen der Flüssigkeitsströmung nach einer vorbestimmten Zeit, um über die Rampe (5; 105) ein Volumen an flüssigem Produkt (2; 102) auszubringen, das dem materiellen Volumen entspricht, das Totvolumen genannt wird, und sich zwischen dem Nachlauf der Auslassöffnung (10.2; 110.2) der Förderpumpe (10; 110) und dem Nachlauf der Rampe (5; 105) erstreckt.

13. Verfahren nach Anspruch 12, **dadurch gekennzeichnet, dass** es darüber hinaus die folgenden Schritte enthält:
- die Anwendung einer Vorrichtung (1; 101) nach einem der Ansprüche 6 und 7; und
- das Einschalten der Förderpumpe (10; 110), um eine Strömung des flüssigen Produkts (2; 102) zwischen dem Versorgungsbehälter (3; 103) und der Saugöffnung (10.1; 110.1) der Förderpumpe (10; 110) zu erreichen;
- das Einschalten der Hilfspumpe (30; 130), um eine Hilfsströmung des flüssigen Produkts (2; 102) zwischen dem Versorgungsbehälter (3; 103) und der Saugöffnung (10.1; 110.1) der Förderpumpe (10; 110) zu erreichen.

14. Verfahren nach Anspruch 13, **dadurch gekennzeichnet, dass** es darüber hinaus die folgenden Schritte enthält:
- die Anwendung der Vorrichtung (1; 101) nach Anspruch 9, indem man im Nachlauf der Hilfspumpe (30; 130) einen Druck generiert, der höher ist, als der Druck, der von der Entleerungspumpe (22; 142) generiert wird;
- die Messungen einbeziehen, die vom Durchflusssensor (27; 127) durchgeführt werden, um ein Hilfsvolumen quantitativ zu bestimmen, das von der Hilfspumpe (30; 130) bewegt wird, und in die Versorgungsleitung (9; 109) strömt;
- das Unterbrechen der Hilfsströmung, wenn das Hilfsvolumen dem Restvolumen im Versorgungsbehälter (3; 103) entspricht.

## Claims

1. A device (1; 101), for spraying a liquid product (2; 102) on a surface such as an agricultural land, the device (1; 101) comprising:
- a boom (5; 105) including a plurality of sections (6; 106) each equipped with several nozzles (8; 108) for projecting the liquid product (2; 102);
- a supply tank (3; 103) designed to contain the liquid product (2; 102);
- at least one supply duct (9; 109) configured to be connected to the boom (5; 105);
- a supply pump (10; 110), preferably of the centrifugal type, comprising a suction port (10.1; 110.1) connected to the supply tank (3; 103) and a discharge port (10.2; 110.2) connected to the supply duct (9; 109);
the device (1; 101) further comprising a fluid tank (20; 140) and an evacuation pump (22; 142), the evacuation pump (22; 142) comprising a suction port (22.1) connected to the fluid tank (20; 140)
the device being **characterized in that** the evacuation pump comprises a discharge port (22.2) connected to the suction port (10.1; 110.1) of the supply pump (10; 110).

2. The device (1; 101) according to claim 1, **characterized in that** the boom (5; 105) includes ducts (7; 107) arranged so that two successive sections (6; 106) are connected by a respective duct (7; 107), and **in that** the elements of the boom (5; 105) located furthest downstream are formed by the nozzles (8; 108).

3. The device (1; 101) according to any of the preceding claims, **characterized in that** it comprises at least an unpriming detector (26; 126) arranged to generate a signal as soon as the supply pump (10; 110) unprimes so as to trigger the actuation of the evacuation pump (22; 142).

4. The device (1; 101) according to any of the preceding claims, **characterized in that** the unpriming detector (26; 126) comprises a pressure sensor which is disposed downstream of the supply pump (10; 110), preferably downstream of the supply duct (9; 109), more preferably on the boom (5; 105).

5. The device (1; 101) according to any of the preceding claims, **characterized in that** it further comprises a flow rate sensor (27; 127) arranged on the supply duct (9; 109).

6. The device (1; 101) according to any of the preceding claims, **characterized in that** it further comprises an auxiliary pump (30; 130) comprising:
- a suction port which is connected to the bottom of the supply tank (3; 103) and which is disposed under the bottom of the supply tank (3; 103); and
- a discharge port connected to the supply pump (10; 110).

7. The device (1; 101) according to claim 6, **characterized in that** the auxiliary pump (30; 130) comprises a Venturi effect pump.

8. The device (1) according to any of the preceding claims, **characterized in that** it further comprises at least one valve called recirculation valve (51, 52; 151, 152), which is arranged on a recirculation duct, so as to interrupt a recirculation flow when a gauge sensor (3.2) indicates that the volume of liquid product (2; 102) contained in the supply tank (3; 103) becomes lower than a predetermined low level.

9. The device (1) according to any of the preceding claims, **characterized in that** the fluid contained in the fluid tank (20) is water, the fluid tank (20) can be a rinsing tub, the evacuation pump (22) being preferably a diaphragm pump.

10. The device (101) according to any of claims 1 to 8, **characterized in that** the fluid contained in the fluid tank (140) is compressed air, **in that** the fluid tank (140) is a compressed air accumulator and **in that** the evacuation pump (142) is a compressor.

11. The device (101) according to any of claims 9 to 10, **characterized in that** it further comprises a first drain valve (116.1) arranged to control a complete drain of the supply pump (110), and, preferably, a second drain valve (116.2) arranged to control a complete drain of a filter (112) disposed upstream of the supply pump (110).

12. A method, for spraying a liquid product (2; 102) on a surface such as an agricultural land, the method comprising the following steps:
- implementing a device (1; 101) according to any of the preceding claims;
- detecting the instant when the supply pump (10; 110) unprimes during a flow of liquid product (2; 102) supply between the supply tank (3; 103) and the suction port (10.1; 110.1) of the supply pump (10; 110);
- interrupting the supply flow;
- actuating the evacuation pump (22; 142) in order to produce a fluid flow, preferably at predetermined flow rate and pressure, between the discharge port (22.2) of the evacuation pump (22; 142) and the suction port (10.2; 110.2) of the supply pump (10; 110); and
- interrupting the flow of fluid after a predetermined period so as to evacuate by the boom (5; 105) a volume of liquid product (2; 102) corresponding to the material volume, called dead volume, which extends between the downstream of the discharge port (10.2; 110.2) of the supply pump (10; 110) and the downstream of the boom (5; 105).

13. The method according to claim 12, **characterized in that** it further comprises the following steps:
- implementing a device (1; 101) according to any of claims 6 and 7; and
- actuating the supply pump (10; 110) in order to produce a flow of the liquid product (2; 102) between the supply tank (3; 103) and the suction port (10.1; 110.1) of the supply pump (10; 110);
- actuating the auxiliary pump (30; 130) in order to produce an auxiliary flow of liquid product (2; 102) between the supply tank (3; 103) and the suction port (10.1; 110.1) of the supply pump (10; 110).

14. A method according to claim 13, **characterized in that** it further comprises the following steps:
- implementing the device (1; 101) according to claim 9 by generating, downstream of the auxiliary pump (30, 130), a pressure higher than the pressure generated by the evacuation pump (22; 142);
- integrating the measurements made by the flow rate sensor (27; 127) so as to quantify an auxiliary volume displaced by the auxiliary pump (30; 130) and flowing in the supply duct (9; 109);
- interrupting the auxiliary flow when the auxiliary volume corresponds to the residual volume in supply tank (3; 103).
